# EUROPEAN PATENT SPECIFICATION

(11) **EP 3 896 275 B1**
(45) Date of publication and mention of the grant of the patent: **26.04.2023**
(21) Application number: 21163475.3
(22) Date of filing: 18.03.2021
(51) Int. Cl.: F02M 35/10, F02M 35/104, F02M 35/112, B60K 5/02, B60K 13/02, B60K 17/22

(54) **VEHICLE WITH ENGINE INTAKE PASSAGE STRUCTURE**
FAHRZEUG MIT EINLASSKANALSTRUKTUR EINES MOTORS
VÉHICULE AVEC STRUCTURE DE PASSAGE D'ADMISSION DE MOTEUR

(30) Priority: 17.04.2020 JP 2020074093
(43) Date of publication of application: 20.10.2021
(73) Proprietor: MAZDA MOTOR CORPORATION, Hiroshima 730-8670 (JP)
(72) Inventor: Hamazume, Yoshihiro, Hiroshima 730-8670 (JP); Yoshikawa, Takashi, Hiroshima 730-8670 (JP)
(74) Representative: Behr, Wolfgang

(56) References cited:
- EP-A1- 3 043 061
- EP-A1- 3 480 449
- JP-A- 2011 185 147

## Description

### [Technical Field]

The present disclosure relates to an intake passage structure of an in-vehicle engine.

### [Background Art]

For example, JP-A-2020-2796 discloses the intake device of a multi-cylinder engine equipped with a surge tank directly connected to the entrance portion of an intake port. Specifically, the ceiling surface of the inner peripheral surface of this surge tank extends in the cylinder row direction, that is, the engine output shaft direction.

In addition, JP-A-2008-285999 discloses an intake manifold equipped with a surge tank connected to the intake port via the intake pipe. Specifically, the intake manifold disclosed in JP-A-2008-285999 includes a partition plate that divides the lower space formed below the opening end of the surge tank into the left and right portions. According to the JP-A-2008-285999 described above, the intake air toward the lower space is blocked from flowing into the lower space by the partition plate.
EP 3 043 061 A1 discloses an intake system for an internal combustion engine. The intake system includes plural intake pipes being configured to be connected to cylinders of a main body of the internal combustion engine, respectively, an external gas distribution portion distributing a single type of an external gas to each of the plural intake pipes, a main body of the intake system including the plural intake pipes and the external gas distribution portion, and an external gas introduction passage being integrally formed with the main body of the intake system, the external gas introduction passage being configured to connect the main body of the internal combustion engine to the external gas distribution portion of the main body of the intake system, the external gas introduction passage serving as a single passage being configured to introduce the external gas from the main body of the internal combustion engine to the external gas distribution portion.
JP 2011 185 147 A discloses an intake manifold being provided with a communicating pipe that communicates a lower portion of the surge tank with an airflow separation section (intake branch side) of a bent section while bypassing the intake downstream side of the surge tank. A differential pressure is produced between both ends of the communicating pipe by airflow separation or the like caused by the flow of intake, and a fluid suction force from the surge tank side to the intake branch side is created inside the communicating pipe. In this way, water or oil in the lower portion of the surge tank can be sucked up into the intake branch via the communicating pipe and be sucked into the engine.
An air intake apparatus is known from EP 3 480 449 A1.

### [Summary of the Invention]

### [Problem to be solved by the invention]

By the way, when developing an in-vehicle engine (so-called "longitudinal engine") in which an engine output shaft is disposed in the vehicle front and rear direction, the inventors of the present application and the like have come up with the idea of inclining the engine output shaft downward toward one side (vehicle rear side or vehicle front side) in the vehicle front and rear direction instead of extending the engine output shaft parallel to the vehicle front and rear direction because of the layout of the propeller shaft and the like.

When the engine output shaft is inclined downward, the cylinder row direction is also inclined downward. In this case, the ceiling surface of the surge tank described in the patent documents 1 and 2 and the like is also inclined downward along the engine output shaft and eventually the cylinder row direction.

The inventors of the present application and the like have found new problems specific to low temperature environments such as winter and cold regions as a result of clarifying the concerns about the surge tank in which the ceiling surface is inclined downward. Specifically, for example, it is assumed that icicles are formed so as to extend from the ceiling surface of the surge tank because moisture in the air is frozen during parking. In this case, the icicles are melted after the engine is started, but the water produced by the melting flows along the ceiling surface inclined downward as described above and may be sucked unevenly into a specific cylinder through the intake port located in the lowermost portion. Suction of water into a specific cylinder can lead to unfavorable events such as water hammer.

The technology disclosed herein addresses the problem described above with an object of causing the water produced by the melting of the icicles to be evenly sucked into the individual cylinders when the ceiling surface of the surge tank is inclined with respect to the engine output shaft.

### [Means for solving the Problem]

A first aspect of the present disclosure relates to a vehicle comprising an in-vehicle engine that has a plurality of cylinders and an engine output shaft disposed in a vehicle front and rear direction, the in-vehicle engine comprising an intake passage structure.

According to the first aspect of the present disclosure, there is provided the intake passage structure of an in-vehicle engine, the intake passage structure including a surge tank attached to an entrance portion of an intake port formed in a cylinder head of the in-vehicle engine, a ceiling surface of an inner peripheral surface of the surge tank being inclined downward along the engine output shaft, a first projecting portion extending in an intake and exhaust direction of the in-vehicle engine and projecting toward a bottom surface of the inner peripheral surface of the surge tank being formed on the ceiling surface, in which the in-vehicle engine is mounted on a vehicle in a state in which the engine output shaft is inclined downward toward one side in the vehicle front and rear direction.

Here, "extending in the intake and exhaust direction of the in-vehicle engine" includes "extending in a direction slightly inclined with respect to the intake and exhaust direction" in addition to "extending parallel to the intake and exhaust direction". Preferably, the angle formed by the extension direction of the first projecting portion and the intake and exhaust direction is smaller than the angle formed by the extension direction and the engine output shaft. The intake and exhaust direction preferably extends at an angle of 90° with respect to the extension direction of the engine output shaft. The angle formed by the extension direction of the first projecting portion and the extension direction of the engine output shaft is preferably bigger than 45°.

According to the first aspect described above, by providing the first projecting portion on the ceiling surface of the surge tank and extending the first projecting portion in the intake and exhaust direction, the flow of water on the ceiling surface in the engine output shaft direction (cylinder row direction) can be blocked. By blocking the flow of water, the suction of water to a specific cylinder (specifically, the cylinder located in the lowermost position) can be suppressed. In this way, the water produced by the melting of icicles can be sucked into the individual cylinders evenly.

In addition, according to a second aspect of the present disclosure, the ceiling surface may be disposed at a position higher in a vehicle height direction than an upper surface of an inner peripheral surface in the entrance portion of the intake port.

According to the second aspect described above, by utilizing the height difference between the ceiling surface of the surge tank and the upper surface of the intake port, the flow of water blocked by the first projecting portion can be smoothly guided to the cylinder close to the first projecting portion. This can achieve both the smooth suction into the individual cylinders and the suppression of suction into a specific cylinder.

In addition, according to a third aspect of the present disclosure, a projection amount of the first projecting portion may increase as the first projecting portion approaches the entrance portion of the intake port in the intake and exhaust direction.

The projection amount of the first projecting portion is desirably made as large as possible to block the flow of water more reliably. However, when the projection amount of the first projecting portion is excessively large, the circulation of intake air in the surge tank is obstructed and the distribution performance of intake air, which is the original function of the surge tank 8, may be hindered.

Accordingly, by making the projection amount of the first projecting portion different according to the distance from the entrance portion of the intake port as in the third aspect described above, both the blocking performance of water by the first projection portion and the distribution performance of the intake air can be obtained.

In addition, according to a fourth aspect of the present disclosure, the projection amount of an inner projecting portion of the first projecting portion may gradually increase towards the entrance portion of the intake port.

In an embodiment of the present invention, a lower edge portion of the inner projecting portion extends to the same height as the bottom surface of the upstream end portion of the branch pipe.
In an embodiment of the present invention, a lower edge portion of the inner projecting portion extends substantially linearly while being inclined with respect to the intake and exhaust direction.

In addition, according to a fifth aspect of the present disclosure, a dimension of the first projecting portion in an engine output shaft direction may be larger as the first projecting portion approaches the entrance portion of the intake port in the intake and exhaust direction.

The dimension of the first projecting portion in the engine output shaft direction is desirably made as large as possible to block the flow of water more reliably. However, when the dimension of the first projecting portion is excessively large, the volume of the surge tank is reduced and the distribution performance of intake air, which is the original function of the surge tank 8, may be hindered.

Accordingly, by making the dimension of the first projecting portion different according to the distance from the entrance portion of the intake port as in the fifth aspect described above, both the blocking performance of water by the first projection portion and the distribution performance of the intake air can be obtained.
According to the present invention, the first projection portion comprises an inner projecting portion and an outer projecting portion, wherein the inner projecting portion has a larger thickness in the engine output shaft direction than the outer projecting portion.
In an embodiment of the present invention, an inner projecting portion of the first projection portion may be formed by denting an outer surface of a first tank portion downward.
In an embodiment of the present invention, an outer projecting portion of the first projection portion includes a rib-shaped projecting portion provided on the ceiling surface.
In an embodiment of the present invention, the inner projection portion and the outer projecting portion are connected integrally with each other in the intake and exhaust direction.

In addition, according to a sixth aspect of the present disclosure, a second projecting portion that extends in the intake and exhaust direction and projects toward the ceiling surface may be formed on the bottom surface.

According to the sixth aspect described above, when the water blocked by the first projecting portion drops on the bottom surface of the surge tank, the flow of water along the bottom surface can be blocked by the second projecting portion. This can suppress the suction of water into a specific cylinder.

In addition, according to a seventh aspect of the present disclosure, an introduction opening through which air is introduced into the surge tank may be provided in a middle portion in the engine output shaft direction of the bottom surface.
In an embodiment of the present invention, the bottom surface is inclined downward toward the introduction opening.
In an embodiment of the present invention, the second projecting portion extends toward the introduction opening.

According to the seventh aspect described above, water can flow along the second projecting portion and the water can be guided to the introduction opening. This can discharge the water through the introduction opening.

In addition, according to an eighth aspect of the present disclosure, the engine comprises a plurality of intake ports and the surge tank may have a plurality of branch pipes connected to the entrance portions of the intake ports.
In an embodiment of the present invention, the plurality of branch pipes is arranged so as to be inclined downward along the engine output shaft.
In an embodiment of the present invention, the first projecting portion is disposed in a space between two adjacent branch pipes in the engine output shaft direction.

According to the eighth aspect described above, by disposing each of the first projecting portions in the space between the adjacent branch pipes, the first projecting portions can block the water without interfering with the circulation of intake air through the branch pipes.

In addition, according to a ninth aspect of the present disclosure, each of at least two first projection portions may be disposed in the space between respective adjacent branch pipes.

In addition, according to a tenth aspect of the present disclosure, the second projection portion may be disposed in a space between adjacent branch pipes.

In an embodiment of the present invention, each of at least two second projection portions is disposed in the space between respective adjacent branch pipes.

In addition, according to an eleventh aspect of the present disclosure, at least part of the first projecting portion may be offset so as to be closer to the branch pipe located on a vehicle front side among the adjacent branch pipes.

According to the eleventh aspect described above, the flow of water along the ceiling surface can be reliably blocked at an earlier timing.

In addition, according to a twelfth aspect of the present disclosure, an inner projecting portion of the first projection portion may disposed in the middle of adjacent branch pipes.

In an embodiment of the present invention, an outer projecting portion of the first projection portion is disposed closer to a branch pipe located on the vehicle front side among the adjacent branch pipes.

In addition, according to a thirteenth aspect of the present disclosure, the surge tank may be such configured that water flowing along the ceiling surface is blocked in the engine output shaft direction by the at least one first projecting portion and is guided to a cylinder adjacent to the first projecting portions.

In addition, according to a fourteenth aspect of the present disclosure, the surge tank is such configured that flow of water along the bottom surface is blocked by the second projecting portions and is guided to an introduction opening provided in a bottom surface of the surge tank.

### [Advantage of the invention]

As described above, according to the present disclosure, when the ceiling surface of the surge tank is inclined with respect to the engine output shaft, the water produced by the melting of icicles can be sucked into the individual cylinders evenly.

### [Brief Description of the Drawings]

[Fig. 1] Fig. 1 is a side view illustrating the structure of an engine.
[Fig. 2] Fig. 2 is a front view illustrating the structure of the engine.
[Fig. 3] Fig. 3 is a perspective view illustrating the structure of the engine.
[Fig. 4] Fig. 4 is a sectional view illustrating the structure of the engine.
[Fig. 5] Fig. 5 is a diagram illustrating the structure of the upper half of a surge tank.
[Fig. 6] Fig. 6 is a diagram illustrating the structure of the lower half of the surge tank.
[Fig. 7] Fig. 7 is a diagram used to describe a flow of water along the surge tank.
[Fig. 8] Fig. 8 is a diagram illustrating the structure of a vehicle equipped with the engine.

### [Modes for Carrying Out the Invention]

Embodiments of the present disclosure will be described below with reference to the drawings. The following description is an example.

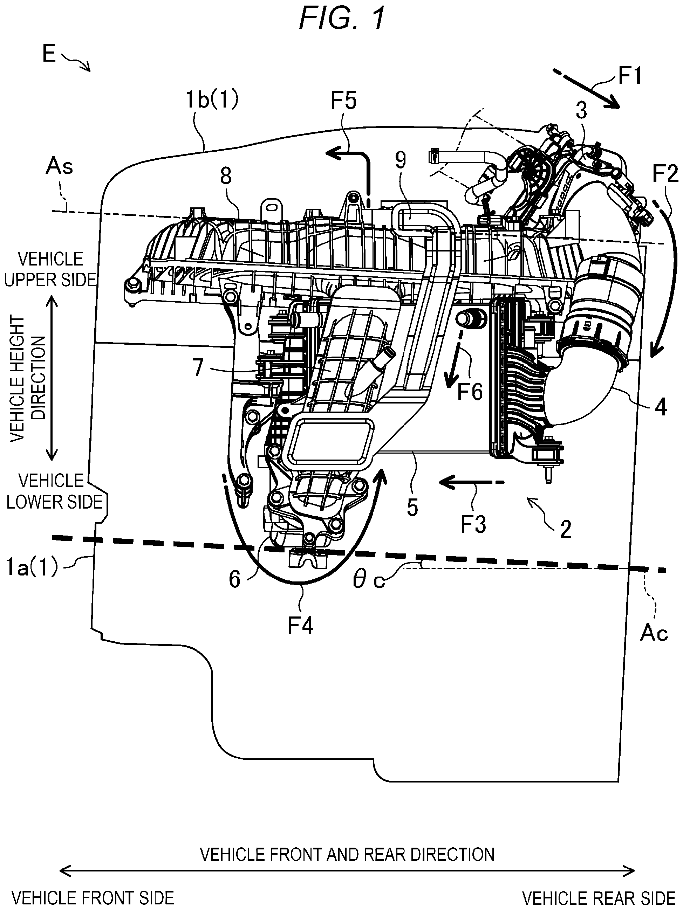

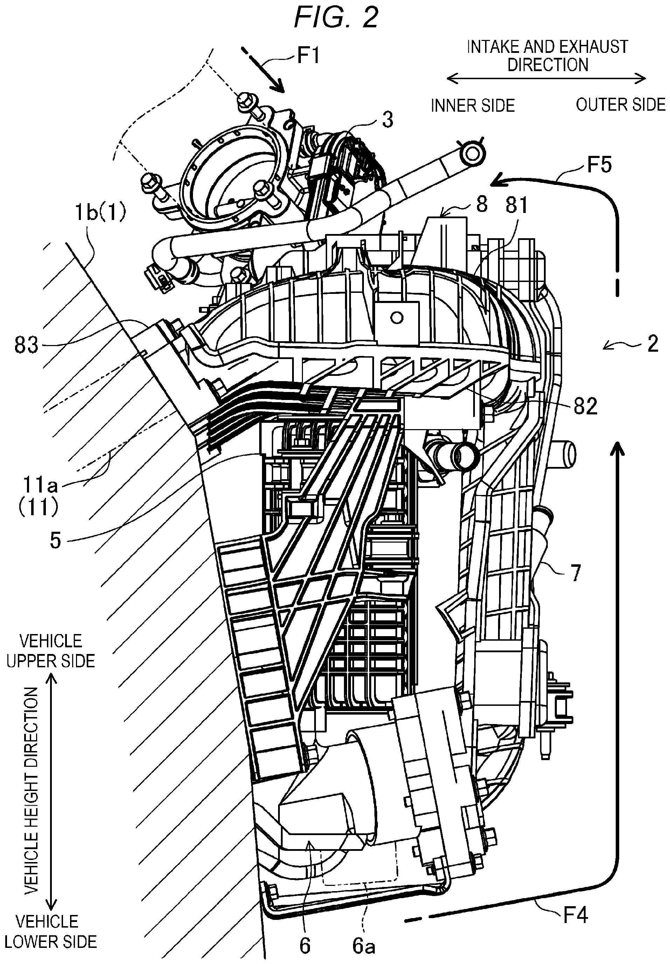

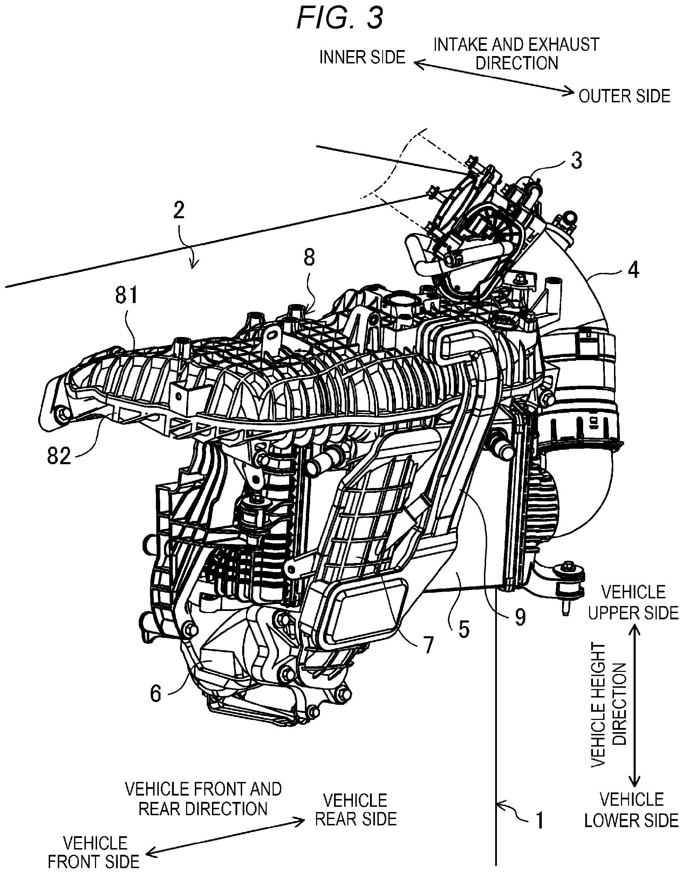

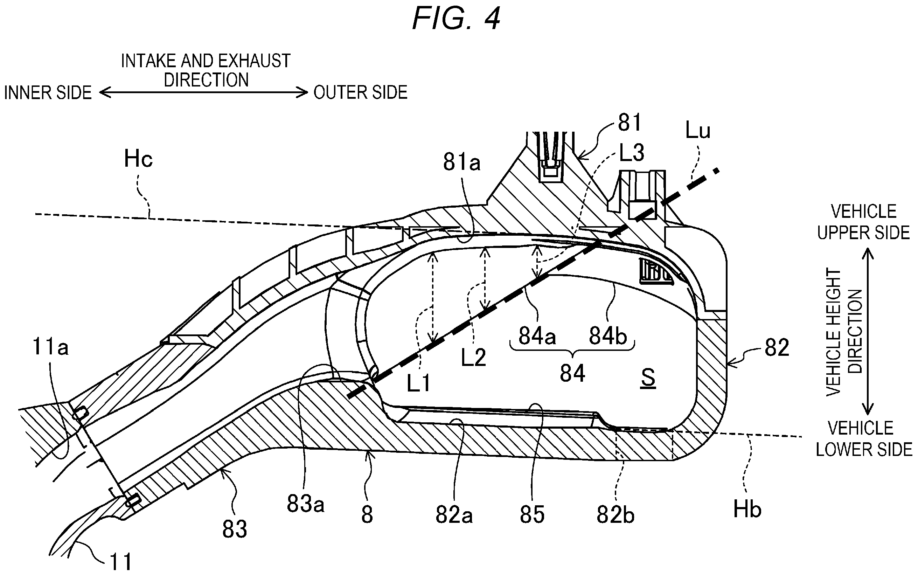

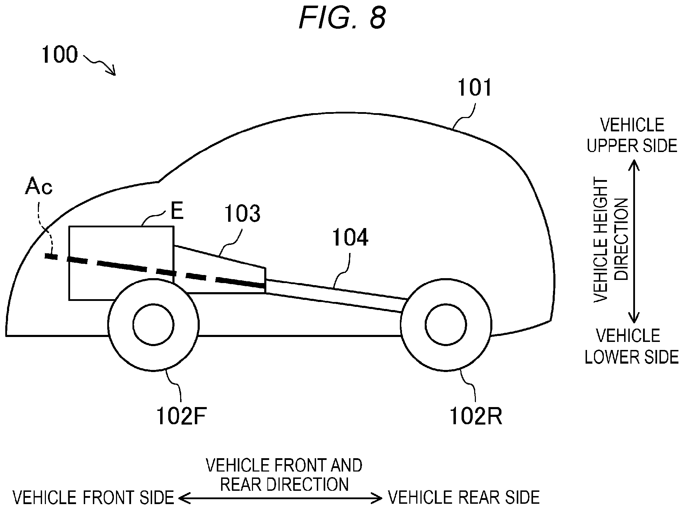

Fig. 1 is a side view illustrating the structure of an engine E as an in-vehicle engine. In addition, Fig. 2 is a front view illustrating the structure of the engine E, Fig. 3 is a perspective view illustrating the structure of the engine E, and Fig. 4 is a sectional view illustrating the structure of the engine E. In addition, Fig. 8 is a diagram illustrating the structure of an automobile 100 as a vehicle equipped with the engine E.

In the following description, the "front side" refers to the vehicle front side (specifically, the movement direction of the automobile 100) in the vehicle front and rear direction and the "rear side" refers to the vehicle rear side (specifically, the reverse movement direction of the automobile 100) in the vehicle front and rear direction.

Similarly, the "upper side" refers to the vehicle upper side in the vehicle height direction and the "lower side" refers to the vehicle lower side in the vehicle height direction. In addition, the "inner side" refers to the direction toward the engine E along the intake and exhaust direction and the "outer side" refers to the direction away from the engine E along the intake and exhaust direction.

### <Overall structure of automobile>

As illustrated in Fig. 8, the automobile 100 according to the embodiment is a so-called front engine/rear drive four-wheel vehicle (FR vehicle), which is a rear-wheel drive four-wheel vehicle having the engine E on the vehicle front side. Specifically, the automobile 100 illustrated in Fig. 8 includes a vehicle body 101, a pair of front wheels 102F, a pair of rear wheels 102R, the engine E mounted in the front portion of the vehicle body 101, a transmission 103 coupled to the rear portion of the engine E, and a propeller shaft 104 coupling the transmission 103 to the rear wheels 102R.

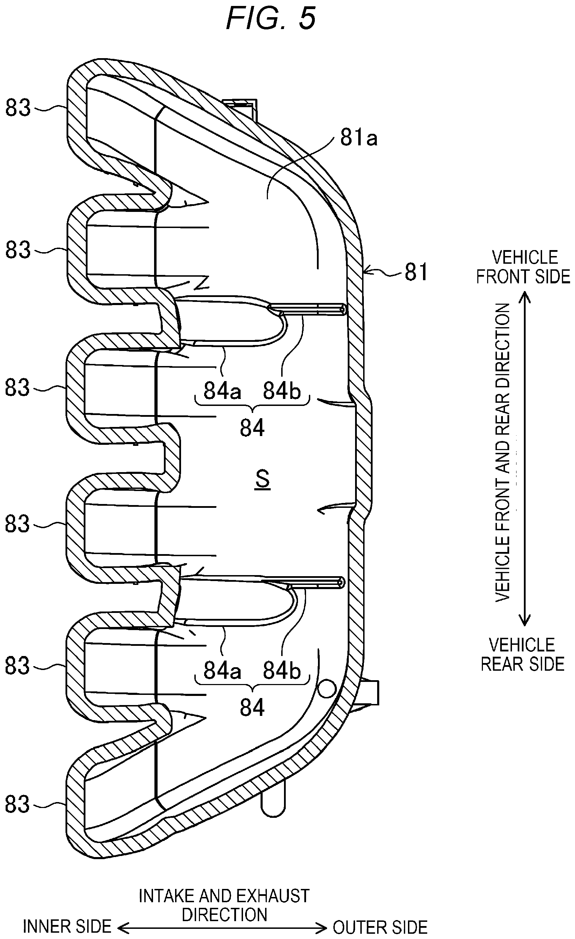

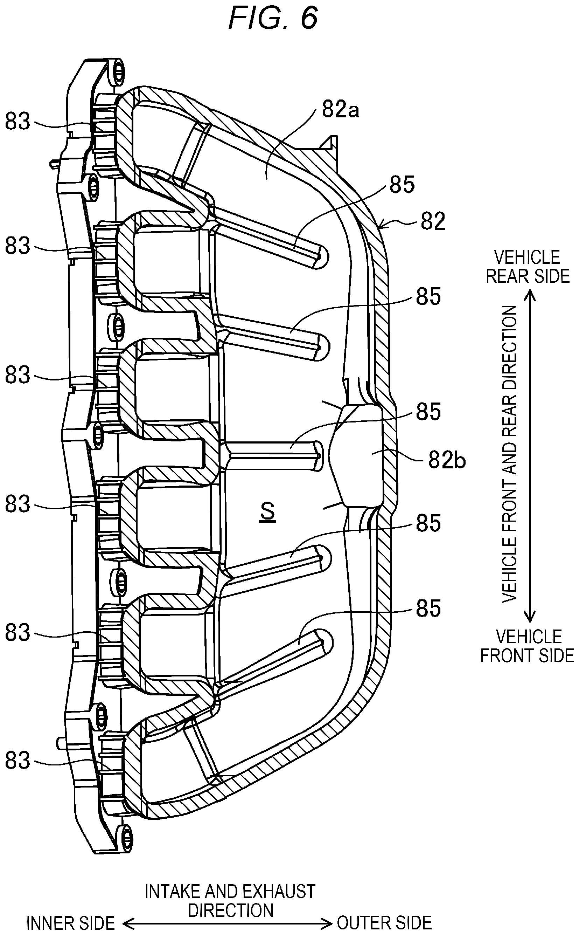

The engine E is configured as a multi-cylinder longitudinal engine. Specifically, the engine E has a plurality of cylinders (six cylinders in the embodiment as indicated in drawings such as Figs. 5 and 6). The direction (cylinder row direction) in which the plurality of cylinders is arranged coincides with the extension direction (engine output shaft direction) of an engine output shaft Ac. In the engine E, which is a longitudinal engine, the engine output shaft Ac is disposed in the vehicle front and rear direction. This engine output shaft Ac is disposed parallel to the propeller shaft 104.

The transmission 103 is coupled to the rear portion of the engine E. The transmission 103 changes the number of revolutions of the engine output shaft Ac and transmits the changed number of revolutions to the propeller shaft 104.

The propeller shaft 104 is disposed in the vehicle front and rear direction. Specifically, the propeller shaft 104 is not exactly parallel to the vehicle front and rear direction and inclined downward with respect to the vehicle front and rear direction. In particular, the propeller shaft 104 according to the embodiment extends toward the vehicle rear side while being inclined downward.

As the propeller shaft 104 is inclined downward, the engine output shaft Ac of the engine E is also inclined downward. Specifically, the engine E is mounted on the automobile 100 with the engine output shaft Ac inclined downward toward one side in the vehicle front and rear direction. In particular, the engine output shaft Ac according to the embodiment extends toward the vehicle rear side while being inclined downward (see inclination angle θc in Fig. 1) as illustrated in Fig. 1.

### <Outline structure of engine>

As illustrated in Figs. 1 to 3, the engine E includes an engine body 1 having a plurality of cylinders and an intake device 2 that introduces intake air into the engine body 1. Of the components of the engine E, the intake device 2 has the intake passage structure according to the present disclosure.

The engine body 1 is formed by combining a cylinder block 1a, a cylinder head 1b, and the like with each other. The engine body 1 includes the engine output shaft Ac inclined downward with respect to the vehicle front and rear direction and a plurality of cylinders arranged along the engine output shaft Ac.

Here, intake ports 11 leading to the cylinders are formed in the cylinder head 1b of the engine E as illustrated in Fig. 2 (see also Fig. 4). Entrance portions 11a as the upstream end portions of the intake ports 11 open in the intake side wall surface of the engine body 1. The "intake side wall surface" here corresponds to one wall surface (the left side surface of the engine body 1 in the embodiment) of the engine body 1 in the vehicle width direction.

As illustrated in Figs. 1 to 3, the intake device 2 includes, in order from the upstream side in the intake flow direction, an air cleaner (not illustrated), a throttle valve 3, a first intake pipe 4, an intercooler 5, a second intake pipe 6, a neck pipe 7, and a surge tank 8. The intake device 2 further includes an EGR gas introduction pipe 9 through which EGR gas flows back.

The throttle valve 3 is disposed above the rear end portion of the surge tank 8. As indicated by arrow F1, the throttle valve 3 circulates the intake air obliquely downward and backward and can adjust the flow rate of the intake air. The first intake pipe 4 is connected to the throttle valve 3.

The first intake pipe 4 is disposed behind the surge tank 8. The first intake pipe 4 is formed in a tubular shape extending substantially in the vertical direction. The first intake pipe 4 circulates intake air substantially downward as indicated by arrow F2. The intercooler 5 is connected to the lower end portion of the first intake pipe 4.

The intercooler 5 is disposed on the lower side of the right half of the surge tank 8 and on the inner side of the neck pipe 7. As indicated by arrow F3, the intercooler 5 circulates the intake air from the vehicle rear side to the front side and can cool the intake air. The second intake pipe 6 is connected to the front end portion of the intercooler 5.

As illustrated in, for example, Fig. 2, the second intake pipe 6 is disposed on the lower side of the intercooler 5 with respect to the surge tank 8. The second intake pipe 6 is formed in a tubular shape extending substantially in the intake and exhaust direction. The second intake pipe 6 circulates the intake air having passed through the intercooler 5 substantially toward the outer side. The neck pipe 7 is connected to the end portion on the outer side of the second intake pipe 6. In addition, the lower portion of the second intake pipe 6 is provided with a pool portion 6a for storing the water flowing back through the neck pipe 7 into the second intake pipe 6.

The neck pipe 7 is disposed below the surge tank 8, especially the middle portion in the front and rear direction of the surge tank 8. The neck pipe 7 is formed in a tubular shape extending in the vertical direction. The neck pipe 7 circulates the intake air having passed through the second intake pipe 6 upward as indicated by arrow F4. The surge tank 8 is connected to the upper end portion of the neck pipe 7. In addition, the EGR gas introduction pipe 9 is connected to the middle portion in the vertical direction of the neck pipe 7.

The EGR gas introduction pipe 9 is disposed from the upper side to the outer side of the surge tank 8 and disposed on the rear side and the outer side of the neck pipe 7. The EGR gas introduction pipe 9 is formed in a tubular shape extending substantially in the vertical direction. The EGR gas introduction pipe 9 causes at least part of the exhaust gas generated by combustion in a cylinder to flow back and then be introduced into the neck pipe 7 as EGR gas as indicated by arrow F6.

The surge tank 8 is attached to the entrance portions 11a of the intake ports 11. This surge tank 8 faces the entrance portions 11a with the branch pipes 83, which are part of the surge tank 8, sandwiched therebetween and is connected to the entrance portions 11a via the branch pipes 83. That is, the surge tank 8 according to the embodiment is directly connected to the entrance portions 11a via the branch pipes 83 integrated with the surge tank 8 without intervention of separate tubular members such as the first intake pipe 4 and the neck pipe 7. As indicated by arrow F5, the surge tank 8 temporarily stores the intake air having passed through the neck pipe 7 and distributes this intake air to the individual cylinders.

The inner peripheral surface of the surge tank 8 partitions a storage space S that extends in the cylinder row direction. This cylinder row direction coincides with the direction (engine output shaft direction) extending along the engine output shaft Ac as described above. In contrast, the engine output shaft Ac is inclined downward with respect to the vehicle front and rear direction. Accordingly, the storage space S extending in the cylinder row direction is also inclined downward with respect to the vehicle front and rear direction.

Specifically, a ceiling surface 81a of the inner peripheral surface of the surge tank 8 extends parallel to the engine output shaft Ac as indicated by dot-dot-dash line as shown in Fig. 1 (for the ceiling surface 81a, see also drawings such as Figs. 4 and 5). More specifically, the ceiling surface 81a of the inner peripheral surface of the surge tank 8 is inclined downward toward the vehicle rear side.

The surge tank 8 according to the embodiment includes various ideas to solve the problems found when the ceiling surface 81a is inclined downward. The structure of the surge tank 8 will be described in detail below. The structure of the surge tank 8 may be used independently of the further features of the intake device 2 described so far.

### <Detailed structure of surge tank>

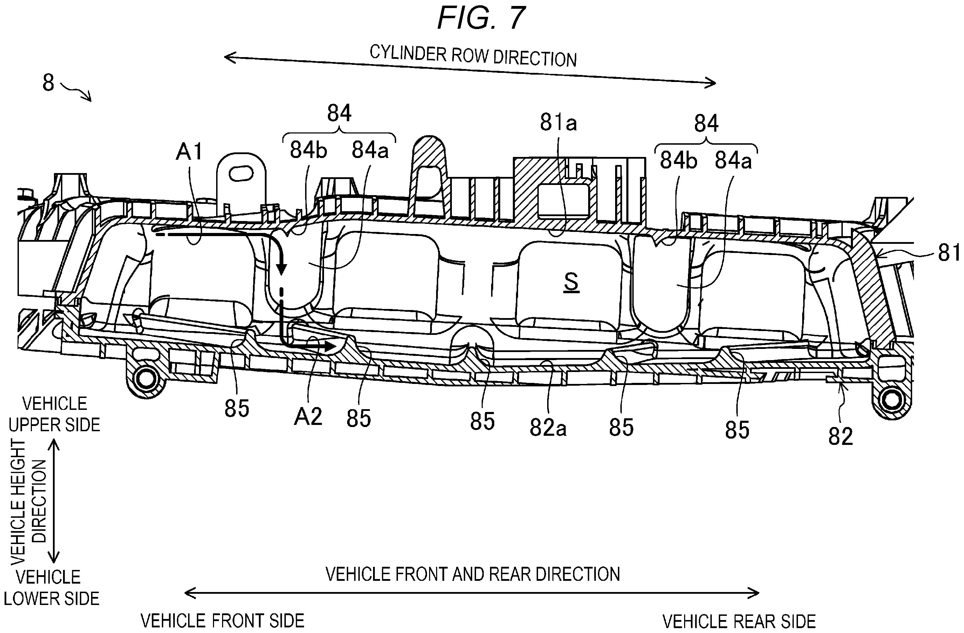

Fig. 5 is a diagram illustrating the structure of the upper half of the surge tank 8. Fig. 6 is a diagram illustrating the structure of the lower half of the surge tank 8. Fig. 7 is a diagram used to describe a flow of water along the surge tank 8.

Returning to Figs. 2 to 4, the surge tank 8 according to the embodiment includes a first tank portion 81 which is the upper half of the surge tank 8 and a second tank portion 82 which is the lower half of the surge tank 8.

The storage space S of the surge tank 8 is defined by the inner peripheral surfaces of the first tank portion 81 and the second tank portion 82. This storage space S is disposed at a position higher than the entrance portions 11a of the intake ports 11 in the vehicle height direction.

The surge tank 8 also has the plurality of branch pipes 83 connected to the entry portions 11a of the intake ports 11, respectively. The plurality of branch pipes 83 is disposed so as to be arranged next to each other in the cylinder row direction. In a preferred embodiment, the plurality of branch pipes 83 is arranged at the same distance to the engine output shaft Ac.

As illustrated in Fig. 4, each of the branch pipes 83 extends from the storage space S toward an entrance portion 11a while being inclined downward along the intake and exhaust direction. Specifically, each of the branch pipes 83 extends substantially straight toward the lower side in the vehicle height direction from the outer side toward the inner side in the intake and exhaust direction.

As illustrated in Figs. 5 and 6, in both the first tank portion 81 and the second tank portion 82, the dimensions in the vehicle front and rear direction and the cylinder row direction are larger than the dimensions in the intake and exhaust direction. In the first tank portion 81 and the second tank portion 82, the plurality of branch pipes 83 is provided integrally with the longer side portions that are located on the inner side in the intake and exhaust direction and extend in the cylinder row direction.

The ceiling surface 81a inclined downward as described above of the inner peripheral surface of the surge tank 8 is formed by the inner peripheral surface of the first tank portion 81. As indicated by dot-dot-dash line Hc in Fig. 4, this ceiling surface 81a is disposed at a position higher in the vehicle height direction than the upper surface of the inner peripheral surface in the entrance portions 11a of the intake ports 11.

In contrast, a bottom surface 82a of the inner peripheral surface of the surge tank 8 is formed by the inner peripheral surface of the second tank portion 82. As illustrated in Fig. 4, this bottom surface 82a faces the ceiling surface 81a with a space.

In addition, as illustrated in Fig. 6, an introduction opening 82b through which air is introduced into the surge tank 8 is provided at the middle portion in the engine output shaft direction (cylinder row direction) of the bottom surface 82a. This introduction opening 82b is provided in a portion of the bottom surface 82a located on the outer side in the intake and exhaust direction. The downstream end portion of the neck pipe 7 is connected to the introduction opening 82b. The intake air having passed through the neck pipe 7 flows into the storage space S via the introduction opening 82b. In addition, in a cross section (cross section illustrated in Fig. 4) orthogonal to the engine output shaft Ac, the bottom surface 82a of the surge tank 8 is inclined downward toward the introduction opening 82b.

As illustrated in Figs. 4 and 5, there are first projecting portions 84 that extend in the intake and exhaust direction of the engine E and project toward the bottom surface 82a of the inner peripheral surface of the surge tank 8 on the ceiling surface 81a of the inner peripheral surface of the surge tank 8.

Specifically, each of the first projecting portions 84 is disposed in a space between two adjacent branch pipes 83 in the engine output shaft direction (cylinder row direction). In the example illustrated in Fig. 5, the first projecting portions 84 are disposed in the space between the second branch pipe 83 (from the front side in the cylinder row direction) and the third branch pipe 83 and the space between the fourth branch pipe 83 and the fifth branch pipe 83.

In addition, each of the first projection portions 84 according to the embodiment includes an inner projection portion 84a disposed close to the entrance portion 11a of the intake port 11 in the intake and exhaust direction and an outer projecting portion 84b disposed relatively apart from the inner projection portion 84a.

In the embodiment, the inner projecting portion 84a is formed by denting the outer surface of the first tank portion 81 downward. In contrast, the outer projecting portion 84b includes a rib-shaped projecting portion provided on the ceiling surface 81a. As illustrated in Fig. 5, the inner projection portion 84a and the outer projecting portion 84b are connected integrally with each other in the intake and exhaust direction.

In addition, as indicated by double-headed arrows L1, L2, and L3 in Fig. 4, the projection amount of the first projecting portion 84 increases as the first projecting portion 84 approaches the entrance portion 11a of the intake port 11 in the intake and exhaust direction.

Specifically, in the embodiment, the projection amount (L1 to L3) of the inner projecting portion 84a of the first projecting portion 84 gradually increases toward the inner side from the outer side in the intake and exhaust direction. More specifically, a lower edge portion Lu of the inner projecting portion 84a extends substantially linearly while being inclined with respect to the intake and exhaust direction, as illustrated in Fig. 4. This lower edge portion Lu is located at substantially the same height as the ceiling surface 81a on the outer side in the intake and exhaust direction and located at substantially the same height as the bottom surface of the upstream end portion 83a of the branch pipe 83 on the inner side in the intake and exhaust direction. The lower edge portion Lu of the inner projecting portion 84a extends substantially parallel to the branch pipes 83.

In addition, as illustrated in Fig. 5, the dimension of the first projecting portion 84 in the engine output shaft direction (cylinder row direction) becomes larger as the first projecting portion 84 approaches the entrance portion 11a of the intake port 11 in the intake and exhaust direction.

Specifically, in the embodiment, the dimension of the inner projecting portion 84a in the engine output shaft direction is larger than the dimension of the outer projecting portion 84b in the same direction when seen in the vehicle height direction as illustrated in Fig. 5. In other words, the inner projecting portion 84a has a larger thickness in the engine output shaft direction than the outer projecting portion 84b.

In addition, as illustrated in Fig. 5, at least part of the first projecting portion 84 is offset so as to be close to the branch pipe 83 located on the vehicle front side among the plurality of branch pipes 83.

Specifically, in the embodiment, the inner projecting portion 84a of the first projection portion 84 is disposed in the middle of the adjacent branch pipes 83. In contrast, the outer projecting portion 84b of the first projection portion 84 is disposed close to the branch pipe 83 located on the vehicle front side among the adjacent branch pipes 83, as illustrated in Fig. 5.

In contrast, as illustrated in Figs. 4 and 6, second projecting portions 85 that extend in the intake and exhaust direction of the engine E and project toward the ceiling surface 81a of the inner peripheral surface of the surge tank 8 are formed on the bottom surface 82a of the inner peripheral surface of the surge tank 8.

Specifically, each of the second projecting portions 85 is disposed in the space between the plurality of branch pipes 83 in the engine output shaft direction (cylinder row direction). When seen in the vehicle height direction as illustrated in Fig. 6, the second projecting portions 85 extend toward the introduction opening 82b while being inclined.

In the example illustrated in Fig. 6, each of the second projecting portions 85 is disposed in the space between the first branch pipe 83 (from the front side in the cylinder row direction) and the second branch pipe 83, the space between the second branch pipe 83 and the third branch pipe 83, the space between the third branch pipe 83 and the fourth branch pipe 83, the space between the fourth branch pipe 83 and the fifth branch pipe 83, and the space between the fifth branch pipe 83 and the sixth branch pipe 83.

### <About flow of water along the ceiling surface>

Fig. 7 is a diagram used to describe a flow of water along the surge tank 8.

By the way, when the engine output shaft Ac is inclined downward as described above, the cylinder row direction is also inclined downward. In this case, the ceiling surface 81a of the surge tank 8 is also inclined downward along the engine output shaft Ac and eventually the cylinder row direction, as illustrated by dot-dot-dash line Hc in Fig. 1.

The inventors of the present application and the like have found new problems specific to low temperature environments such as winter and cold regions as a result of clarifying the concerns about the surge tank 8 in which the ceiling surface 81a is inclined downward. Specifically, for example, it is assumed that icicles may be formed in the surge tank 8 because moisture in the air is frozen during parking. In this case, the icicles are melted after the engine E is started, but the water produced by the melting flows along the ceiling surface 81a inclined downward as described above and may be sucked unevenly into a specific cylinder through the intake port 11 located in the lowermost portion. Suction of water into a specific cylinder can lead to unfavorable events such as water hammer.

In contrast, according to the embodiment, by providing the first projecting portions 84 on the ceiling surface 81a of the surge tank 8 and extending the first projecting portions 84 in the intake and exhaust direction as illustrated in Fig. 4, the flow of water in the engine output shaft direction (cylinder row direction) on the ceiling surface 81a can be blocked (see arrow A1 in Fig. 7). By blocking the flow of water, the suction of water into a specific cylinder (specifically, the cylinder located in the lowermost position) can be suppressed. In this way, the water produced by the melting of the icicles can be sucked into the individual cylinders evenly.

In addition, as illustrated in Fig. 4, by disposing the ceiling surface 81a at a position higher than the upper surface of the inner peripheral surface in the entrance portion 11a of the intake port 11, the height difference between the ceiling surface 81a of the surge tank 8 and the upper surface of the intake port 11 can be utilized. Accordingly, the flow of water blocked by the first projecting portions 84 can be smoothly guided to the cylinder close to the first projecting portions 84. This can achieve both smooth suction into the individual cylinders and the suppression of suction into a specific cylinder.

By the way, the projection amount of the first projecting portions 84 is desirably made as large as possible to block the flow of water more reliably. In contrast, when the projection amount of the first projecting portions 84 is excessively large, the circulation of intake air in the surge tank 8 is obstructed and the distribution performance of intake air, which is the original function of the surge tank 8, may be impaired.

Accordingly, as indicated by double-headed arrows L1 to L3 in Fig. 4, by making the projection amount of the first projecting portions 84 different according to the distance from the entrance portion 11a of the intake port 11, both the blocking performance of water by the first projecting portions 84 and the distribution performance of intake air can be obtained.

In addition, the dimension of the first projecting portions 84 in the engine output shaft direction is desirably made as large as possible to block the flow of water more reliably. In contrast, when the dimension of the first projecting portions 84 is excessively large, the volume of the surge tank 8 becomes small and the distribution performance of the intake air, which is the original function of the surge tank 8, may be impaired.

Accordingly, as illustrated in Fig. 5, by making the dimension of the first projecting portions 84 different (specifically, by making the dimension in the engine output shaft direction different between the outer projecting portions 84b and the inner projecting portions 84a) according to the distance from the entrance portion 11a of the intake port 11, both the blocking performance of water by the first projection portions 84 and the distribution performance of the intake air can be obtained.

In addition, as illustrated in Fig. 4, by providing the second projecting portions 85 on the bottom surface 82a of the surge tank 8 and extending the second projecting portions 85 in the intake and exhaust direction, when the water blocked by the first projecting portions 84 drops on the bottom surface 82a of the surge tank 8, the flow of the water along the bottom surface 82a can be blocked by the second projecting portions 85 (see arrow A2 in Fig. 7). Accordingly, the suction of the water into a specific cylinder can be suppressed.

In addition, as illustrated in Fig. 6, by extending the second projecting portions 85 toward the introduction opening 82b, water can flow along the second projecting portion 85 and the water can be guided to the introduction opening 82b. This can discharge the water through the introduction opening 82b.

Specifically, as illustrated by arrows A1 and A2 in Fig. 7, the water blocked by the first projecting portion 84 flows along the second projecting portion 85 and reaches the introduction opening 82b. The water having reached the introduction opening 82b flows back through the neck pipe 7 and is stored in the pool section 6a of the second intake pipe 6.

In addition, as illustrated in Fig. 5, by disposing each of the first projecting portions 84 in the space between two adjacent branch pipes 83, the first projecting portions 84 can block the water without interfering with the circulation of intake air through the branch pipes 83.

### <Other embodiments>

Although the embodiment described above adopts the structure in which the engine output shaft Ac and eventually the ceiling surface 81a of and the surge tank 8 are inclined downward toward the vehicle rear side in the vehicle front and rear direction, the present disclosure is not limited to this structure. For example, the engine output shaft Ac and eventually the ceiling surface 81a of the surge tank 8 may be inclined downward toward the vehicle front side in the vehicle front and rear direction so as to follow the bonnet line of the automobile 100.

In addition, although the structure in which the first projecting portion 84 extends parallel to the intake and exhaust direction as an example of the structure in which the first projecting portion 84 extends in the intake and exhaust direction as illustrated in Fig. 6 is disclosed in the embodiment described above, the present disclosure is not limited to this structure.

As another example of the structure in which the first projecting portion 84 extends in the intake and exhaust direction, for example, the structure in which the first projecting portion 84 extends while being slightly inclined with respect to the intake and exhaust direction may be adopted. When using this structure, the angle formed by the extension direction of the first projecting portion 84 and the intake and exhaust direction is preferably set to be smaller than the angle formed by the extension direction and the vehicle front and rear direction.

### [Description of Reference Signs and Numerals]

E: engine (in-vehicle engine)
1: engine body
1a: cylinder block
1b: cylinder head
11: intake port
11a: entrance portion of intake port
2: intake device
8: surge tank
81: first tank portion
81a: ceiling surface of surge tank
82: second tank portion
82a: bottom surface of surge tank
82b: introduction opening
83: branch pipe
84: first projecting portion
84a: inner projecting portion
84b: outer projecting portion
85: second projecting portion
100: automobile (vehicle)
Ac: engine output shaft
Hc: height of ceiling surface
L1: projection amount of first projecting portion
L2: projection amount of first projecting portion
L3: projection amount of first projecting portion

## Claims

1. Vehicle (100) comprising a vehicle-mounted engine (E) that has a plurality of cylinders and an engine output shaft (Ac) disposed in a vehicle front and rear direction, the vehicle-mounted engine (E) comprising an intake passage structure,
wherein the vehicle-mounted engine (E) is mounted on the vehicle (100) in a state in which the engine output shaft (Ac) is inclined downward toward one side in the vehicle front and rear direction, and
wherein the intake passage structure comprises a surge tank (8) attached to an entrance portion (11a) of an intake port (11) formed in a cylinder head (1b) of the vehicle-mounted engine (E),
**characterized in that**
a ceiling surface (81a) of an inner peripheral surface of the surge tank (8) is inclined downward along the engine output shaft (Ac), and
a first projecting portion (84) extending in an intake and exhaust direction of the vehicle-mounted engine (E) and projecting toward a bottom surface (82a) of the inner peripheral surface of the surge tank (8) is formed on the ceiling surface (81a),
wherein the first projection portion (84) comprises an inner projecting portion (84a) and an outer projecting portion (84b), wherein the inner projecting portion (84a) has a larger thickness in the engine output shaft direction than the outer projecting portion (84b),
wherein preferably the outer projecting portion (84b) includes a rib-shaped projecting portion provided on the ceiling surface (81a).

2. The vehicle (100) according to claim 1,
wherein the ceiling surface (81a) is disposed at a position higher in a vehicle height direction than an upper surface of an inner peripheral surface in the entrance portion (11a) of the intake port (11).

3. The vehicle (100) according to claim 1 or 2,
wherein a projection amount (L1 to L3) of the first projecting portion (84) increases as the first projecting portion (84) approaches the entrance portion (11a) of the intake port (11) in the intake and exhaust direction.

4. The vehicle (100) according to claim 3,
wherein the projection amount (L1 to L3) of an inner projecting portion (84a) of the first projecting portion (84) gradually increases toward the entrance portion (11a) of the intake port (11),
and/or wherein a lower edge portion (Lu) of the inner projecting portion (84a) extends to the same height as the bottom surface of the upstream end portion (83a) of the branch pipe (83).

5. The vehicle (100) according to any one of claims 1 to 4,
wherein a dimension of the first projecting portion (84) in an engine output shaft direction is larger as the first projecting portion (84) approaches the entrance portion (11a) of the intake port (11) in the intake and exhaust direction.

6. The vehicle (100) according to any one of claims 1 to 5,
wherein a second projecting portion (85) that extends in the intake and exhaust direction and projects toward the ceiling surface (81a) is formed on the bottom surface (82a).

7. The vehicle (100) according to claim 6,
wherein an introduction opening (82b) through which air is introduced into the surge tank (8) is provided in a middle portion in the engine output shaft direction of the bottom surface (82a),
wherein preferably the bottom surface (82a) is inclined downward toward the introduction opening (82b), and
wherein preferably the second projecting portion (85) extends toward the introduction opening (82b).

8. The vehicle (100) according to any one of claims 1 to 7,
wherein the engine comprises a plurality of intake ports (11) and the surge tank (8) has a plurality of branch pipes (83) connected to entrance portions (11a) of the intake ports (11),
wherein preferably the first projecting portion (84) is disposed in a space between two adjacent branch pipes (83) in the engine output shaft direction.

9. The vehicle (100) according to claim 8,
wherein each of at least two first projection portions (84) is disposed in the space between respective adjacent branch pipes (83).

10. The vehicle (100) according to claim 6 and 8,
wherein the second projection portion (85) is disposed in a space between adjacent branch pipes (83),
wherein preferably each of at least two second projection portions (85) is disposed in the space between respective adjacent branch pipes (83).

11. The vehicle (100) according to claim 8,
wherein at least part of the first projecting portion (84) is offset so as to be closer to the branch pipe (83) located on a vehicle front side among the adjacent branch pipes (83).

12. The vehicle (100) according to claim 11,
wherein an inner projecting portion (84a) of the first projection portion (84) is disposed in the middle of adjacent branch pipes (83),
wherein preferably an outer projecting portion (84b) of the first projection portion (84) is disposed closer to a branch pipe (83) located on the vehicle front side among the adjacent branch pipes (83).

13. The vehicle (100) according to any preceding claim,
wherein the surge tank (8) is such configured that water flowing along the ceiling surface (81a) is blocked in the engine output shaft direction by the at least one first projecting portion (84) and is guided to a cylinder adjacent to the first projecting portions (84).

14. The vehicle (100) according to any preceding claim, wherein the surge tank (8) is such configured that flow of water along the bottom surface (82a) is blocked by the second projecting portions (85) and is guided to an introduction opening (82b) being provided in a bottom surface (82a) of the surge tank (8).

## Patentansprüche

1. Fahrzeug (100), aufweisend einen in dem Fahrzeug montierten Motor (E), der eine Vielzahl von Zylindern und eine Motorabtriebswelle (Ac) aufweist, die in einer Fahrzeugvorder- und -rückrichtung angeordnet ist, wobei der in dem Fahrzeug montierte Motor (E) eine Ansaugtraktstruktur aufweist;
wobei der in dem Fahrzeug montierte Motor (E) an dem Fahrzeug (100) in einem Zustand montiert ist, in dem die Motorabtriebswelle (Ac) zu einer Seite in der Fahrzeugvorder- und -rückrichtung nach unten geneigt ist, und
wobei die Ansaugtraktstruktur einen Ausgleichsbehälter (8), der an einem Eingangsabschnitt (11a) eines Ansaugstutzens (11) angebracht ist, der in einem Zylinderkopf (1b) des in dem Fahrzeug montierten Motors (E) ausgebildet ist,
**dadurch gekennzeichnet, dass**
eine Deckenfläche (81a) einer Innenumfangsfläche des Ausgleichsbehälters (8) entlang der Motorabtriebswelle (Ac) nach unten geneigt ist, und
ein erster Vorsprungsabschnitt (84), der sich in einer Einlass- und Auslassrichtung des in dem Fahrzeug montierten Motors (E) erstreckt und zu einer Bodenfläche (82a) der Innenumfangsfläche des Ausgleichsbehälters (8) vorsteht, an der Deckenfläche (81a) ausgebildet ist,
wobei der erste Vorsprungsabschnitt (84) einen inneren Vorsprungsabschnitt (84a) und einen äußeren Vorsprungsabschnitt (84b) aufweist, wobei der innere Vorsprungsabschnitt (84a) eine größere Dicke in Motorabtriebswellenrichtung hat als der äußere Vorsprungsabschnitt (84b),
wobei der äußere Vorsprungsabschnitt (84b) einen rippenförmigen Vorsprungsabschnitt aufweist, der an der Deckenfläche (81a) vorgesehen ist.

2. Fahrzeug (100) nach Anspruch 1,
wobei die Deckenfläche (81a) an einer Position angeordnet ist, die in einer Fahrzeughöhenrichtung höher liegt als eine obere Fläche einer Innenumfangsfläche in dem Eingangsabschnitt (11a) des Ansaugstutzens (11).

3. Fahrzeug (100) nach Anspruch 1 oder 2,
wobei ein Vorsprungsbetrag (L1 bis L3) des ersten Vorsprungsabschnitts (84) mit zunehmender Annäherung des ersten Vorsprungsabschnitts (84) an den Eingangsabschnitt (11a) der Einlassöffnung (11) in Einlass- und Auslassrichtung zunimmt.

4. Fahrzeug (100) nach Anspruch 3,
wobei der Vorsprungsbetrag (L1 bis L3) eines inneren Vorsprungsabschnitts (84a) des ersten Vorsprungsabschnitts (84) zu dem Eingangsabschnitt (11a) der Einlassöffnung (11) allmählich zunimmt,
und/oder wobei sich ein unterer Randabschnitt (Lu) des inneren Vorsprungsabschnitts (84a) bis auf die gleiche Höhe erstreckt wie die Bodenfläche des stromaufwärtigen Endabschnitts (83a) des Abzweigrohrs (83).

5. Fahrzeug (100) nach einem der Ansprüche 1 bis 4,
wobei eine Abmessung des ersten Vorsprungsabschnitts (84) in Richtung einer Motorabtriebswelle mit zunehmender Annäherung des ersten Vorsprungsabschnitts (84) an den Eingangsabschnitt (11a) des Ansaugstutzens (11) in Einlass- und Auslassrichtung größer ist.

6. Fahrzeug (100) nach einem der Ansprüche 1 bis 5,
wobei ein zweiter Vorsprungsabschnitt (85), der sich in der Einlass- und Auslassrichtung erstreckt und in Richtung der Deckenfläche (81a) vorsteht, an der Bodenfläche (82a) ausgebildet ist.

7. Fahrzeug (100) nach Anspruch 6,
wobei eine Einleitungsöffnung (82b), durch die Luft in den Ausgleichsbehälter (8) eingeleitet wird, in einem mittleren Abschnitt in Motorabtriebswellenrichtung der Bodenfläche (82a) vorgesehen ist,
wobei die Bodenfläche (82a) bevorzugt nach unten zur Einleitungsöffnung (82b) hin geneigt ist, und
wobei sich der zweite Vorsprungsabschnitt (85) bevorzugt zur Einleitungsöffnung (82b) hin erstreckt.

8. Fahrzeug (100) nach einem der Ansprüche 1 bis 7,
wobei der Motor eine Vielzahl von Einlassöffnungen (11) umfasst und der Ausgleichsbehälter (8) eine Vielzahl von Zweigrohren (83) aufweist, die mit Eingangsabschnitten (11a) der Ansaugstutzen (11) verbunden sind,
wobei der erste Vorsprungsabschnitt (84) bevorzugt in einem Raum zwischen zwei benachbarten Zweigrohren (83) in der Motorabtriebswellenrichtung angeordnet ist.

9. Fahrzeug (100) nach Anspruch 8,
wobei jeder von zumindest zwei ersten Vorsprungsabschnitten (84) in dem Raum zwischen jeweiligen benachbarten Abzweigrohren (83) angeordnet ist.

10. Fahrzeug (100) nach Anspruch 6 und 8,
wobei der zweite Vorsprungsabschnitt (85) in einem Raum zwischen benachbarten Abzweigrohren (83) angeordnet ist,
wobei vorzugsweise jeder von zumindest zwei zweiten Vorsprungsabschnitten (85) in dem Raum zwischen jeweiligen benachbarten Abzweigrohren (83) angeordnet ist.

11. Fahrzeug (100) nach Anspruch 8,
wobei zumindest ein Teil des ersten Vorsprungsabschnitts (84) derart versetzt ist, dass er näher an dem Abzweigrohr (83) ist, das sich unter den benachbarten Abzweigrohren (83) auf einer Fahrzeugvorderseite befindet.

12. Fahrzeug (100) nach Anspruch 11,
wobei ein innerer Vorsprungsabschnitt (84a) des ersten Vorsprungsabschnitts (84) in der Mitte benachbarter Abzweigrohre (83) angeordnet ist,
wobei bevorzugt ein äußerer Vorsprungsabschnitt (84b) des ersten Vorsprungsabschnitts (84) näher an einem Abzweigrohr (83) angeordnet ist, das sich unter den benachbarten Abzweigrohren (83) auf der Fahrzeugvorderseite befindet.

13. Fahrzeug (100) nach einem der vorstehenden Ansprüche,
wobei der Ausgleichsbehälter (8) derart konfiguriert ist, dass Wasser, das entlang der Deckenfläche (81a) strömt, in Motorabtriebswellenrichtung durch den zumindest einen ersten Vorsprungsabschnitt (84) blockiert wird und zu einem Zylinder angrenzend an die ersten Vorsprungsabschnitten (84) geführt wird.

14. Fahrzeug (100) nach einem der vorstehenden Ansprüche,
wobei der Ausgleichsbehälter (8) derart konfiguriert ist, dass eine Wasserströmung entlang der Bodenfläche (82a) von den zweiten Vorsprungsabschnitten (85) blockiert und zu einer Einleitungsöffnung (82b) geleitet wird, die in einer Bodenfläche (82a) des Ausgleichsbehälters (8) vorgesehen ist.

## Revendications

1. Véhicule (100) comprenant un moteur embarqué (E) qui présente une pluralité de cylindres et un arbre de sortie de moteur (Ac) disposé dans une direction avant et arrière de véhicule, le moteur embarqué (E) comprenant une structure de passage d'admission,
dans lequel le moteur embarqué (E) est monté sur le véhicule (100) dans un état dans lequel l'arbre de sortie de moteur (Ac) est incliné vers le bas en direction d'un côté dans la direction avant et arrière du véhicule, et
dans lequel la structure de passage d'admission comprend un réservoir d'équilibrage (8) fixé à une portion d'entrée (11a) d'un orifice d'admission (11) formé dans une culasse (1b) du moteur embarqué (E),
**caractérisé en ce que**
une surface de plafond (81a) d'une surface périphérique interne du réservoir d'équilibrage (8) est inclinée vers le bas le long de l'arbre de sortie de moteur (Ac), et
une première portion en saillie (84) s'étendant dans une direction d'admission et d'échappement du moteur embarqué (E) et faisant saillie en direction d'une surface de fond (82a) de la surface périphérique interne du réservoir d'équilibrage (8) est formée sur la surface de plafond (81a),
dans lequel la première portion de saillie (84) comprend une portion en saillie interne (84a) et une portion en saillie externe (84b), dans lequel la portion en saillie interne (84a) présente une épaisseur supérieure dans la direction d'arbre de sortie de moteur à celle de la portion en saillie externe (84b),
dans lequel de préférence la portion en saillie externe (84b) inclut une portion en saillie en forme de nervure disposée sur la surface de plafond (81a).

2. Véhicule (100) selon la revendication 1,
dans lequel la surface de plafond (81a) est disposée au niveau d'une position plus élevée dans une direction de hauteur de véhicule qu'une surface supérieure d'une surface périphérique interne dans la portion d'entrée (11a) de l'orifice d'admission (11).

3. Véhicule (100) selon la revendication 1 ou 2,
dans lequel une quantité de saillie (L1 à L3) de la première portion en saillie (84) augmente à mesure que la première portion en saillie (84) s'approche de la portion d'entrée (11a) de l'orifice d'admission (11) dans la direction d'admission et d'échappement.

4. Véhicule (100) selon la revendication 3,
dans lequel la quantité de saillie (L1 à L3) d'une portion en saillie interne (84a) de la première portion en saille (84) augmente progressivement en direction de la portion d'entrée (11a) de l'orifice d'admission (11),
et/ou dans lequel une portion de bord inférieur (Lu) de la portion en saillie interne (84a) s'étend sur la même hauteur que la surface inférieure de la portion d'extrémité amont (83a) du tuyau de dérivation (83).

5. Véhicule (100) selon l'une quelconque des revendications 1 à 4,
dans lequel une dimension de la première portion en saillie (84) dans une direction d'arbre de sortie de moteur augmente à mesure que la première portion en saillie (84) s'approche de la portion d'entrée (11a) de l'orifice d'admission (11) dans la direction d'admission et d'échappement.

6. Véhicule (100) selon l'une quelconque des revendications 1 à 5,
dans lequel une seconde portion en saillie (85) qui s'étend dans la direction d'admission et d'échappement et fait saillie en direction de la surface de plafond (81a) est formée sur la surface inférieure (82a).

7. Véhicule (100) selon la revendication 6,
dans lequel une ouverture d'introduction (82b) à travers laquelle de l'air est introduit dans le réservoir d'équilibrage (8) est fournie dans une portion intermédiaire dans la direction d'arbre de sortie de moteur de la surface inférieure (82a),
dans lequel de préférence la surface inférieure (82a) est inclinée vers le bas en direction de l'ouverture d'introduction (82b), et
dans lequel de préférence la seconde portion en saillie (85) s'étend en direction de l'ouverture d'introduction (82b).

8. Véhicule (100) selon l'une quelconque des revendications 1 à 7,
dans lequel le moteur comprend une pluralité d'orifices d'admission (11) et le réservoir d'équilibrage (8) présente une pluralité de tuyaux de dérivation (83) raccordés à des portions d'entrée (11a) des orifices d'admission (11),
dans lequel de préférence la première portion en saillie (84) est disposée dans un espace entre deux tuyaux de dérivation adjacents (83) dans la direction d'arbre de sortie de moteur.

9. Véhicule (100) selon la revendication 8,
dans lequel chacune d'au moins deux premières portions de saillie (84) est disposée dans l'espace entre des tuyaux de dérivation adjacents respectifs (83).

10. Véhicule (100) selon les revendications 6 et 8,
dans lequel la seconde portion de saillie (85) est disposée dans un espace entre des tuyaux de dérivation adjacents (83),
dans lequel de préférence chacune d'au moins deux portions de saillie (85) est disposée dans l'espace entre des tuyaux de dérivation adjacents respectifs (83).

11. Véhicule (100) selon la revendication 8,
dans lequel au moins une partie de la première portion en saillie (84) est décalée de manière à être plus proche du tuyau de dérivation (83) situé sur un côté avant de véhicule parmi les tuyaux de dérivation adjacents (83).

12. Véhicule (100) selon la revendication 11,
dans lequel une portion en saillie interne (84a) de la première portion de saillie (84) est disposée au milieu de tuyaux de dérivation adjacents (83),
dans lequel de préférence une portion en saillie externe (84b) de la première portion de saillie (84) est disposée plus proche d'un tuyau de dérivation (83) situé sur le côté avant de véhicule parmi les tuyaux de dérivation adjacents (83).

13. Véhicule (100) selon une quelconque revendication précédente,
dans lequel le réservoir d'équilibrage (8) est configuré de sorte que de l'eau s'écoulant le long de la surface de plafond (81a) soit bloquée dans la direction d'arbre de sortie de moteur par l'au moins une portion en saillie (84) et soit guidée vers un cylindre adjacent aux premières portions en saillie (84).

14. Véhicule (100) selon une quelconque revendication précédente, dans lequel le réservoir d'équilibrage (8) est configuré de sorte qu'un écoulement d'eau le long de la surface inférieure (82a) soit bloqué par les secondes portions en saillie (85) et soit guidé vers une ouverture d'introduction (82b) qui est fournie dans une surface inférieure (82a) du réservoir d'équilibrage (8).
